# EUROPÄISCHE PATENTSCHRIFT

(11) **EP 3 623 061 B1**
(45) Veröffentlichungstag und Bekanntmachung des Hinweises auf die Patenterteilung: **13.07.2022**
(21) Anmeldenummer: 18194907.4
(22) Anmeldetag: 17.09.2018
(51) Int. Cl.: B07C 3/08, B07C 5/36

(54) **SORTIERANLAGE UND VERFAHREN ZUM SORTIEREN VON OBJEKTEN**
SORTING SYSTEM AND METHOD FOR SORTING OBJECTS
INSTALLATION DE TRI ET PROCÉDÉ DE TRI D'OBJETS

(43) Veröffentlichungstag der Anmeldung: 18.03.2020
(73) Patentinhaber: Siemens Aktiengesellschaft, 80333 München (DE); Deutsche Post AG, 53113 Bonn (DE)
(72) Erfinder: BECHER, Jörn, 55127 Mainz (DE); HARTMANN, Bernd, 53501 Grafschaft-Leimersdorf (DE); KLINK, Reinhard, 78333 Stockach (DE)
(74) Vertreter: Maier, Daniel Oliver

(56) Entgegenhaltungen:
- WO-A1-99/12834
- US-A- 2 535 715
- US-A- 6 005 211
- US-B1- 8 919 529

## Beschreibung

Die Erfindung betrifft eine Sortieranlage zum Sortieren von Objekten sowie ein Verfahren zum Sortieren von Objekten in einer Sortieranlage.

US 8,919,529 B1 offenbart eine Doppelpositions-Rutsche, die adaptiert ist, Stückgüter zwischen mindestens zwei im Wesentlichen vertikalen Entladepositionen umzuleiten.

Sortieranlagen, wie sie beispielsweise in Paket- oder Versandzentren vorhanden sind, umfassen üblicherweise einen oder mehrere Sorter sowie eine Mehrzahl von Endstellenvorrichtungen. In den Endstellenvorrichtungen einer Sortieranlage werden die von einem Sorter auf die Endstellenvorrichtungen verteilten Objekte bis zum nächsten Verarbeitungsschritt, wie zum Beispiel dem Einladen der Objekte in Rollbehälter für deren Weitertransport, zwischengelagert.

Objekte, die in derselben Endstellenvorrichtung zwischengelagert werden, sind typischerweise für dasselbe Ziel(-gebiet), wie zum Beispiel für ein vorgegebenes Paket-/Versandzentrum oder für einen vorgegebenen Zustellbezirk, bestimmt, wobei die Objekte grundsätzlich nach einem beliebigen anderen Kriterium als ihrem jeweiligen Ziel(-gebiet) auf Endstellenvorrichtungen verteilt werden können. Innerhalb einer Endstellenvorrichtung sind die Objekte üblicherweise chaotisch verteilt. In der jeweiligen Endstellenvorrichtung liegt also insbesondere keine Feinverteilung der Objekte nach weiteren Kriterien (wie zum Beispiel den Zieladressen und/oder den Abmessungen der Objekte) vor.

Aufgrund immer weiter zunehmender Mengen an Objekten, die von Sortieranlagen zu verarbeiten sind, besteht grundsätzlich zunehmender Bedarf danach, die Objekte in einer Sortieranlage feiner zu verteilen, insbesondere die Objekte außer nach ihrem Ziel(-gebiet) auch nach mindestens einem weiteren Kriterium aufzuteilen. Ein Ansatz, eine Feinverteilung von Objekten in einer Sortieranlage zu ermöglichen, sieht vor, in die Sortieranlage zusätzliche Endstellenvorrichtungen einzubauen, sodass die Objekte auf eine größere Anzahl von Endstellenvorrichtungen verteilt werden können.

Die Anzahl realisierbarer Endstellenvorrichtungen einer Sortieranlage hängt unter anderem vom zur Verfügung stehenden Platz sowie von der Länge des jeweiligen Sorters ab. Meist ist die Anzahl realisierbarer Endstellenvorrichtungen bereits ausgereizt, sodass der Einbau zusätzlicher Endstellenvorrichtungen für eine Feinverteilung der Objekte nicht möglich ist.

Eine Aufgabe der Erfindung ist es, in einer Sortieranlage zum Sortieren von Objekten aufwandsgünstig eine Feinverteilung der Objekte zu ermöglichen.

Diese Aufgabe wird erfindungsgemäß gelöst durch eine Sortieranlage nach Anspruch 1 sowie durch ein Verfahren nach Anspruch 13.

Bevorzugte Ausgestaltungen der Erfindung sind in den weiteren Patentansprüchen sowie in der nachfolgenden Beschreibung angegeben.

Die erfindungsgemäße Sortieranlage zum Sortieren von Objekten umfasst einen Sorter zum Fördern von Objekten sowie eine Endstellenvorrichtung zur Aufnahme von Objekten, wobei der Sorter dazu eingerichtet ist, zumindest einige der auf dem Sorter beförderten Objekte längs einer Objekt-Einführrichtung, die von einer lokalen Objekt-Förderrichtung des Sorters in einem an die Endstellenvorrichtung angrenzenden Bereich des Sorters verschiedenen ist, in die Endstellenvorrichtung einzubringen. Erfindungsgemäß weist die Endstellenvorrichtung einen ersten Objektspeicher, einen zweiten Objektspeicher sowie eine Transportvorrichtung auf, wobei die Transportvorrichtung dazu eingerichtet ist, die vom Sorter in die Endstellenvorrichtung eingebrachten Objekte jeweils wahlweise entlang eines ersten Transportwegs zum ersten Objektspeicher oder entlang eines zweiten Transportwegs zum zweiten Objektspeicher zu transportieren. Die Transportvorrichtung ist dazu eingerichtet, die zum ersten Objektspeicher zu transportierenden Objekte längs einer ersten Transportrichtung zum ersten Objektspeicher zu transportieren, und die zum zweiten Objektspeicher zu transportierenden Objekte längs einer zweiten Transportrichtung zum zweiten Objektspeicher zu transportieren. Die erste und die zweite Transportrichtung sind voneinander verschieden. Die zweite Transportrichtung ist eine der ersten Transportrichtung entgegengesetzte Richtung.

Die Erfindung ermöglicht eine Feinverteilung von Objekten innerhalb der Endstellenvorrichtung, da die Objekte mithilfe der Transportvorrichtung auf die beiden Objektspeicher verteilt werden können. Dadurch kann insbesondere eine Feinverteilung der Objekte nach einem vorgegebenen Kriterium realisiert werden, ohne dass hierfür eine zusätzliche Endstellenvorrichtung erforderlich ist.

Zudem kann mittels der beiden Objektspeicher der Endstellenvorrichtung - verglichen mit einer einen einzigen Objektspeicher aufweisenden konventionellen Endstellenvorrichtung - eine größere Speicherkapazität der Endstellenvorrichtung erreicht werden, falls die beiden Objektspeicher der Endstellenvorrichtung zusammen ein größeres Speichervolumen aufweisen als der einzelne Objektspeicher einer konventionellen Endstellenvorrichtung.

Im Sinne der vorliegenden Erfindung handelt es sich bei "Objekten" um sortierbare Gegenstände, die von einem Ort zu einem anderen Ort (einem Zielort) zu bringen sind. Hierbei kann es sich unter anderem um Sendungen handeln. Insbesondere können die in der Sortieranlage zu sortierenden Objekte Postsendungen, wie zum Beispiel Packstücke, Pakete, Päckchen, Briefe oder dergleichen, sein.

Der Sorter der Sortieranlage kann mehrere Umlenkungen aufweisen. In diesem Fall kann die Objekt-Förderrichtung des Sorters, entlang welcher die Objekte auf dem Sorter befördert werden, positionsabhängig sein. Das heißt, an einer ersten Stelle des Sorters kann dessen lokale Objekt-Förderrichtung anders orientiert sein als an einer zweiten Stelle des Sorters.

Vorteilhafterweise ist der Sorter oberhalb des ersten und des zweiten Objektspeichers angeordnet. Mit anderen Worten, der Sorter ist vorteilhafterweise höher gelegen als die beiden Objektspeicher. Dadurch ist es insbesondere möglich, Objekte unter Einfluss der Schwerkraft vom Sorter zum jeweiligen Objektspeicher zu transportieren.

Des Weiteren kann einer der beiden Objektspeicher zumindest teilweise unter dem Sorter platziert sein. Dadurch kann eine platzsparende Ausgestaltung der Endstellenvorrichtung erreicht werden. Die Formulierung, dass "einer der beiden Objektspeicher zumindest teilweise unter dem Sorter platziert" ist, ist vorliegend so zu verstehend, dass der betroffene Objektspeicher, von oben betrachtet, zumindest teilweise durch den Sorter verdeckt wird.

Die erste Transportrichtung kann insbesondere gleich oder im Wesentlichen gleich der Objekt-Einführrichtung sein, längs welcher die Objekte vom Sorter in die Endstellenvorrichtung eingebracht werden. Im Sinne der vorliegenden Erfindung sind die erste Transportrichtung und die Objekt-Einführrichtung als "im Wesentlichen gleich" zu verstehen, wenn diese beiden Richtungen nicht exakt gleich sind, der Winkel zwischen diesen beiden Richtungen jedoch höchstens 20° beträgt.

Die lokale Objekt-Förderrichtung des Sorters in dem an die Endstellenvorrichtung angrenzenden Bereich des Sorters kann beispielsweise senkrecht zur Objekt-Einführrichtung sein. Eine solche Orientierung der Objekt-Einführrichtung (in Bezug auf besagte lokale Objekt-Förderrichtung) lässt sich - durch eine entsprechende konstruktive Ausgestaltung des Sorters - aufwandsgünstig realisieren.

Beispielsweise kann der Sorter als Kippschalensorter oder als Quergurtsorter ausgebildet sein.

Die Transportvorrichtung der Endstellenvorrichtung kann einen antriebslosen Schwerkraftförderer, insbesondere eine Rollenbahn oder eine Rutsche, umfassen. Unter einem antriebslosen Schwerkraftförderer ist vorliegend eine Fördervorrichtung zu verstehen, welche ein Objekt ohne Verwendung einer Antriebsvorrichtung allein durch Schwerkraft fördern kann.

Alternativ oder zusätzlich zu dem antriebslosen Schwerkraftförderer kann die Transportvorrichtung eine mit einem Förderantrieb ausgestattete Fördervorrichtung, wie zum Beispiel einen Bandförderer (auch Gurtförderer genannt) oder einen Rollenförderer, umfassen.

Vorteilhafterweise ist besagter Förderantrieb ein reversierbarer Antrieb, also ein Antrieb mit umkehrbarer Antriebsrichtung. Ein solcher Antrieb ermöglicht es, ein auf der Transportvorrichtung befindliches Objekt - je nach Antriebsrichtung - in eine erste Richtung oder in eine zweite Richtung zu transportieren.

Bei einer vorteilhaften Ausgestaltung der Erfindung weist die Transportvorrichtung einen translatorisch höhenverstellbar gelagerten Fördertisch auf. In diesem Fall ist es vorteilhaft, wenn die Transportvorrichtung außerdem einen Hubmechanismus zum Anheben und Absenken des Fördertisches aufweist. Der Hubmechanismus kann beispielsweise einen Linearantrieb, insbesondere einen Hubzylinder, umfassen.

Unter einer translatorisch höhenverstellbaren Lagerung des Fördertisches ist vorliegend eine Lagerung zu verstehen, bei welcher der Fördertisch durch eine Translationsbewegung seine Höhenposition ändern kann.

Alternativ oder zusätzlich zu dem Fördertisch kann die Transportvorrichtung eine um eine Schwenkachse schwenkbar gelagerte Förderklappe aufweisen. In diesem Fall ist es vorteilhaft, wenn die Transportvorrichtung außerdem einen Schwenkmechanismus zum Schwenken der Förderklappe aufweist. Der Schwenkmechanismus kann beispielsweise ein Schwenklager und einen Linearantrieb, insbesondere einen Hubzylinder, umfassen. Anstelle des Linearantriebs oder zusätzlich zu dem Linearantrieb kann der Schwenkmechanismus ein mit der Förderklappe verbundenes Zugmittel (beispielsweise ein Seil oder eine Kette), eine Umlenkrolle zum Führen des Zugmittels, eine mit dem Zugmittel verbundene Trommel zum Auf- und Abwickeln des Zugmittels sowie einen mit der Trommel verbundenen Motor zum Antreiben der Trommel aufweisen.

Die Förderklappe weist zweckmäßigerweise zwei senkrecht zur Objekt-Einführrichtung ausgerichtete Kanten auf. Vorzugsweise ist besagte Schwenkachse parallel zu diesen beiden Kanten ausgerichtet und näher an derjenigen dieser beiden Kanten angeordnet, welche den größeren Abstand zum Sorter aufweist. Insbesondere kann die Schwenkachse in unmittelbarer Nähe zu derjenigen dieser beiden Kanten angeordnet sein, welche den größeren Abstand zum Sorter aufweist (beispielsweise in einem Abstand von höchstens 60 mm zu dieser Kante).

Der zuvor erwähnte Schwerkraftförderer der Transportvorrichtung kann ein Bestandteil des Fördertisches oder der Förderklappe sein. In gleicher Weise kann die zuvor erwähnte (mit einem Förderantrieb ausgestattete) Fördervorrichtung der Transportvorrichtung ein Bestandteil des Fördertisches oder der Förderklappe sein.

Vorzugsweise sind der erste und der zweite Objektspeicher voneinander beabstandet. Insbesondere können die beiden Objektspeicher an einander gegenüberliegenden Seiten der Transportvorrichtung angeordnet sein.

Mindestens einer der beiden Objektspeicher kann als Entnahmetisch ausgebildet sein. Die in einem solchen Objektspeicher befindlichen Objekte können zum Zwecke des Abtransports zum Beispiel manuell in einen Rollbehälter umgeladen werden.

Bei einer vorteilhaften Ausführungsvariante der Erfindung ist mindestens einer der beiden Objektspeicher als Rollbehälter ausgebildet. In diesem Fall ist es vorteilhaft, wenn die Transportvorrichtung dazu eingerichtet ist, ein Objekt unmittelbar in den/die als Rollbehälter ausgebildeten Objektspeicher einzubringen. Auf diese Weise kann auf ein aufwändiges manuelles Umladen von Objekten in einen Rollbehälter zum Zwecke des Abtransports verzichtet werden.

Ist einer der beiden Objektspeicher als Rollbehälter ausgebildet, kann dieser Objektspeicher beispielsweise als Speicher für kleine Objekte genutzt werden, während der andere der beiden Speicher als Speicher für große Objekte genutzt werden kann.

In bevorzugter Weise ist die Sortieranlage, insbesondere ihre Endstellenvorrichtung, mit einem Steuergerät zum Steuern der Transportvorrichtung ausgestattet. Das Steuergerät ist vorzugsweise dazu eingerichtet, in Abhängigkeit von einem oder mehreren Parametern des jeweiligen in die Endstellenvorrichtung eingebrachten Objekts zu steuern, zu welchem der beiden Objektspeicher das jeweilige Objekt mittels der Transportvorrichtung zu transportieren ist. Zu besagten Parametern des jeweiligen Objekts können/kann zum Beispiel dessen Zieladresse, dessen Abmessungen und/oder dessen Gewicht gehören.

Zur Erfassung des besagten Parameters bzw. der besagten Parameter weist die Endstellenvorrichtung vorteilhafterweise einen oder mehrere Sensoren auf. Zweckmäßigerweise ist das Steuergerät signaltechnisch mit dem Sensor bzw. den Sensoren verbunden.

Ferner kann die Endstellenvorrichtung eine der Transportvorrichtung vorgeschaltete Fördereinheit zum Fördern von in die Endstellenvorrichtung eingebrachten Objekten zu der Transportvorrichtung aufweisen. Diese Fördereinheit kann beispielsweise einen antriebslosen Schwerkraftförderer, insbesondere eine Rollenbahn oder eine Rutsche, umfassen. Alternativ oder zusätzlich zu dem besagten antriebslosen Schwerkraftförderer kann diese Fördereinheit eine mit einem Förderantrieb ausgestattete Fördervorrichtung, wie zum Beispiel einen Bandförderer oder einen Rollenförderer, umfassen.

Die Endstellenvorrichtung kann genau zwei Objektspeicher umfassen, nämlich den zuvor erwähnten ersten Objektspeicher und den zuvor erwähnten zweiten Objektspeicher. Alternativ kann die Endstellenvorrichtung zusätzlich zu den beiden zuvor erwähnten Objektspeichern einen oder mehrere weitere Objektspeicher umfassen. Im letztgenannten Fall kann die Transportvorrichtung der Endstellenvorrichtung dazu eingerichtet sein, die vom Sorter in die Endstellenvorrichtung eingebrachten Objekte entlang eines weiteren Transportwegs zu einem solchen weiteren Objektspeicher zu transportieren.

Die Sortieranlage kann zum Beispiel Bestandteil eines Paket- oder Versandzentrums sein. Bei der zuvor genannten Endstellenvorrichtung kann es sich insbesondere um eine sogenannte Nahendstelle (auch B-Endstelle genannt) handeln. Der zuvor genannte Sorter ist vorzugsweise ein sogenannter Hauptsorter.

Des Weiteren kann die Sortieranlage eine Mehrzahl von Endstellenvorrichtungen der zuvor beschriebenen Art aufweisen. Alle oder einige dieser Endstellenvorrichtungen können in einer Reihe nebeneinander, insbesondere aneinander angrenzend, angeordnet sein. Ferner kann die Sortieranlage eine oder mehrere andersartige Endstellenvorrichtungen aufweisen.

Zusätzlich zu dem zuvor erwähnten Sorter kann die Sortieranlage einen oder mehrere weitere Sorter aufweisen. Insbesondere kann die Sortieranlage mehrere unterschiedliche Typen von Sortern, wie zum Beispiel einen oder mehrere Hauptsorter sowie einen oder mehrere Vorsorter, umfassen.

Wie eingangs erwähnt, betrifft die Erfindung unter anderem ein Verfahren zum Sortieren von Objekten in einer Sortieranlage.

Bei dem erfindungsgemäßen Verfahren werden Objekte auf einem Sorter der Sortieranlage befördert und zumindest einige der auf dem Sorter beförderten Objekte vom Sorter längs einer Objekt-Einführrichtung in eine Endstellenvorrichtung der Sortieranlage eingebracht, wobei die Objekt-Einführrichtung von einer lokalen Objekt-Förderrichtung des Sorters in einem an die Endstellenvorrichtung angrenzenden Bereich des Sorters verschieden ist. Ferner werden beim erfindungsgemäßen Verfahren die vom Sorter in die Endstellenvorrichtung eingebrachten Objekte mithilfe einer Transportvorrichtung der Endstellenvorrichtung jeweils wahlweise entlang eines ersten Transportwegs zu einem ersten Objektspeicher der Endstellenvorrichtung oder entlang eines zweiten Transportwegs zu einem zweiten Objektspeicher der Endstellenvorrichtung transportiert. Diejenigen Objekte, die von der Transportvorrichtung zum ersten Objektspeicher transportiert werden, werden längs einer ersten Transportrichtung zum ersten Objektspeicher transportiert, und diejenigen Objekte, die von der Transportvorrichtung zum zweiten Objektspeicher transportiert werden, werden längs einer zweiten Transportrichtung zum zweiten Objektspeicher transportiert. Die erste Transportrichtung ist von der zweiten Transportrichtung verschieden. Die zweite Transportrichtung ist eine der ersten Transportrichtung entgegengesetzte Richtung.

Weiter oben im Zusammenhang mit der erfindungsgemäßen Sortieranlage beschriebene Ausführungsformen, Ausführungsdetails und Vorteile können sich auch auf das erfindungsgemäße Verfahren beziehen. Ferner kann die im Zusammenhang mit dem erfindungsgemäßen Verfahren genannte Sortieranlage insbesondere die weiter oben beschriebene erfindungsgemäße Sortieranlage sein.

Vorteilhafterweise wird die Transportvorrichtung von einem Steuergerät gesteuert. Vom Steuergerät kann zum Beispiel in Abhängigkeit von einem oder mehreren Parametern des jeweiligen in die Endstellenvorrichtung eingebrachten Objekts gesteuert werden, zu welchem der beiden Objektspeicher das jeweilige Objekt mittels der Transportvorrichtung transportiert wird.

Die bisher gegebene Beschreibung bevorzugter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit der erfindungsgemäßen Sortieranlage und dem erfindungsgemäßen Verfahren kombinierbar. Ferner können Verfahrensmerkmale auch als Eigenschaft der entsprechenden Vorrichtungseinheit angesehen werden.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Figuren näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1 - FIG 4: ein erstes Ausführungsbeispiel einer erfindungsgemäßen Sortieranlage in unterschiedlichen Zuständen;
- FIG 5 - FIG 8: ein zweites Ausführungsbeispiel einer erfindungsgemäßen Sortieranlage in unterschiedlichen Zuständen;
- FIG 9 - FIG 11: ein drittes Ausführungsbeispiel einer erfindungsgemäßen Sortieranlage in unterschiedlichen Zuständen;
- FIG 12: ein viertes Ausführungsbeispiel einer erfindungsgemäßen Sortieranlage.

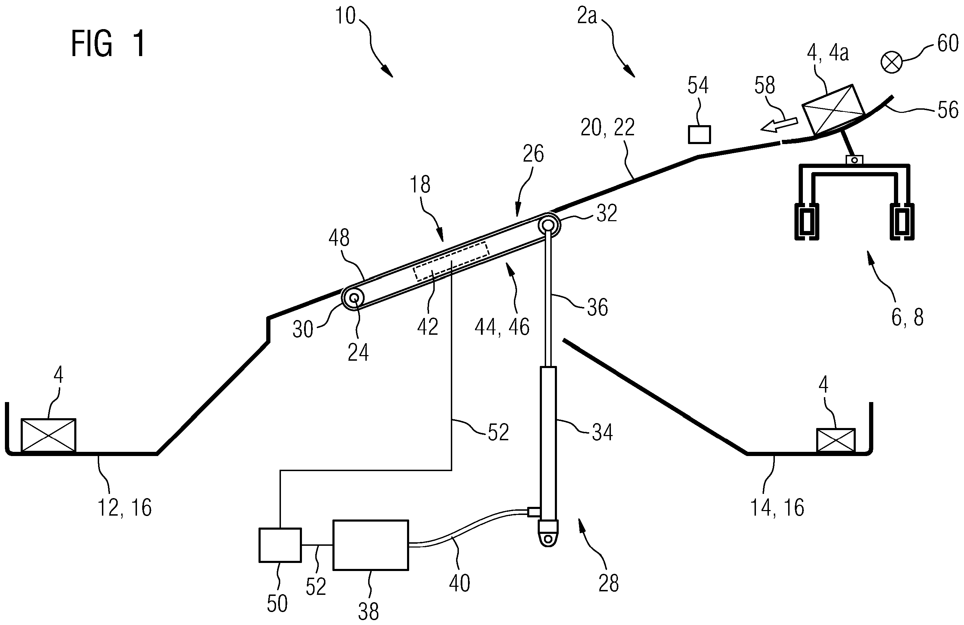

FIG 1 zeigt schematisch eine erste Sortieranlage 2a zum Sortieren von Objekten 4, wie zum Beispiel Paketen.

Die Sortieranlage 2a umfasst einen Sorter 6 zum Fördern von Objekten 4, der im vorliegenden Fall beispielhaft als Kippschalensorter 8 ausgebildet ist. Weiter umfasst die Sortieranlage 2a eine Endstellenvorrichtung 10. Der Sorter 6 ist dazu eingerichtet, zumindest einige der auf dem Sorter 6 beförderten Objekte 4 in die Endstellenvorrichtung 10 einzubringen.

Zusätzlich zu der abgebildeten Endstellenvorrichtung 10 kann die Sortieranlage 2a eine oder mehrere weitere Endstellenvorrichtungen und gegebenenfalls einen oder mehrere weitere Sorter umfassen. Der Einfachheit halber wird im Folgenden auf etwaige weitere Endstellenvorrichtungen und etwaige Sorter der Sortieranlage 2a nicht eingegangen.

Die Endstellenvorrichtung 10 der Sortieranlage 2a umfasst einen ersten Objektspeicher 12 zum (Zwischen-)Lagern von Objekten 4 und einen zweiten Objektspeicher 14 zum (Zwischen-)Lagern von Objekten 4. Im vorliegenden Ausführungsbeispiel sind beide Objektspeicher 12, 14 als Entnahmetische 16 ausgebildet, wobei grundsätzlich andere Ausführungsformen der Objektspeicher 12, 14 möglich sind. Wie aus FIG 1 ersichtlich ist, ist der zweite Objektspeicher 14 teilweise unter dem Sorter 6 positioniert.

Des Weiteren umfasst die Endstellenvorrichtung 10 eine Transportvorrichtung 18, die dazu eingerichtet ist, die vom Sorter 6 in die Endstellenvorrichtung 10 eingebrachten Objekte 4 jeweils wahlweise entlang eines ersten Transportwegs zum ersten Objektspeicher 12 oder entlang eines zweiten Transportwegs zum zweiten Objektspeicher 14 zu transportieren.

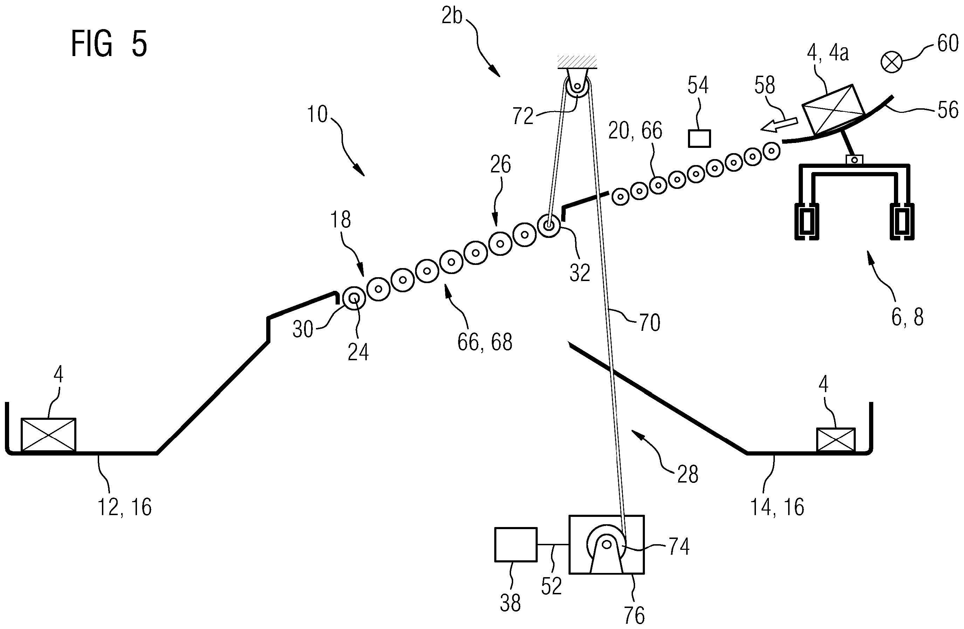

Zwischen der Transportvorrichtung 18 und dem Sorter 6 weist die Endstellenvorrichtung 10 eine Fördereinheit 20 zum Fördern von in die Endstellenvorrichtung 10 eingebrachten Objekten 4 zu der Transportvorrichtung 18 auf. Im vorliegenden Ausführungsbeispiel ist diese Fördereinheit 20 als Rutsche 22 ausgebildet. Alternativ kann die Fördereinheit 20 beispielsweise als antriebslose Rollenbahn (vgl. Sortieranlage 2b in FIG 5) oder als Fördervorrichtung mit einem Förderantrieb ausgebildet sein.

Besagte Transportvorrichtung 18 weist eine um eine Schwenkachse 24 schwenkbar gelagerte Förderklappe 26 sowie einen Schwenkmechanismus 28 zum Schwenken der Förderklappe 26 auf. Die Förderklappe 26 der Transportvorrichtung 18 umfasst eine erste Kante 30, die senkrecht zur Zeichenebene von FIG 1 ausgerichtet ist, sowie eine zweite Kante 32, die senkrecht zur Zeichenebene von FIG 1 ausgerichtet ist. Die Schwenkachse 24, um welche die Förderklappe 26 schwenkbar ist, ist parallel zu diesen beiden Kanten 30, 32 ausgerichtet und an derjenigen dieser beiden Kanten 30, 32 angeordnet, welche näher am ersten Objektspeicher 12 ist.

Der Schwenkmechanismus 28 umfasst ein figürlich nicht dargestelltes Schwenklager, an dem die Förderklappe 26 befestigt ist, sowie einen schwenkbar gelagerten Hubzylinder 34, auf welchem die Förderklappe 26 abgestützt ist und der eine ein- und ausfahrbare Kolbenstange 36 aufweist. Im vorliegenden Ausführungsbeispiel ist der Hubzylinder 34 als Fluidzylinder ausgebildet. Das heißt, die Stellung der Kolbenstange 36 des Hubzylinders 34 ist mittels eines (Steuer-)Fluids steuerbar. Zur Einstellung des Fluiddrucks im Hubzylinder 34 weist der Schwenkmechanismus 28 eine Fluidpumpe 38 auf, die mittels einer Fluidleitung 40 mit dem Hubzylinder 34 verbunden ist.

Die Förderklappe 26 der Transportvorrichtung 18 umfasst einen mit einem reversierbaren Förderantrieb 42 ausgestattete Fördervorrichtung 44. Im vorliegenden Ausführungsbeispiel ist die Fördervorrichtung 44 als Bandförderer 46 ausgebildet. Das heißt, die Fördervorrichtung 44 umfasst ein Förderband 48, welches durch besagten Förderantrieb 42 antreibbar ist. Grundsätzlich sind auch andere Ausführungsformen der Fördervorrichtung 44 möglich. Zum Beispiel kann die Fördervorrichtung 44 als Rollenförderer mit antreibbaren Rollen ausgebildet sein. Bei besagtem Förderantrieb 42 handelt es sich im vorliegenden Fall um einen Elektroantrieb.

Ferner ist die Sortieranlage 2a mit einem Steuergerät 50 zum Steuern der Transportvorrichtung 18 ausgestattet, welches jeweils mittels einer Steuerleitung 52 mit der Fluidpumpe 38 und dem Förderantrieb 42 der Förderklappe 26 verbunden ist. Alternativ kann vorgesehen sein, dass das Steuergerät 50 den Förderantrieb 42 und/oder die Fluidpumpe 38 über Funksignale steuert.

Das Steuergerät 50 ist mittels einer Software, die im Steuergerät 50 implementiert ist, dazu eingerichtet, in Abhängigkeit eines Parameters des jeweiligen in die Endstellenvorrichtung 10 eingebrachten Objekts 4 zu steuern, zu welchem der beiden Objektspeicher 12, 14 das jeweilige Objekt 4 mittels der Transportvorrichtung 18 zu transportieren ist. Besagter Parameter kann beispielsweise die Größe des jeweiligen Objekts 4 sein.

Zur Erfassung des besagten Parameters des jeweiligen Objekts 4 weist die Endstellenvorrichtung 10 einen Sensor 54 auf. Hierbei kann es sich beispielsweise um einen optischen Sensor handeln. Der Sensor 54 ist signaltechnisch mit dem Steuergerät 50 verbunden, zum Beispiel über eine figürlich nicht dargestellte Steuerleitung. Im Betrieb der Sortieranlage 2a erfasst der Sensor 54 besagten Parameter des jeweiligen in die Endstellenvorrichtung 10 eingebrachten Objekts 4 und übermittelt den erfassten Parameter an das Steuergerät 50.

In FIG 1 ist die Sortieranlage 2a in einem Zustand dargestellt, in welchem sich ein Objekt 4a auf dem Sorter 6 befindet und sich die Förderklappe 26 in ihrer oberen Stellung befindet. In diesem Zustand befindet sich die dem Sorter 6 nähere Kante 32 der beiden zuvor erwähnten Kanten 30, 32 der Förderklappe 26 in der gleichen Höhe wie das unteren Ende der zwischen der Transportvorrichtung 18 und dem Sorter 6 angeordneten Fördereinheit 20.

Von diesem Zustand aus wird besagtes Objekt 4a mittels einer Kippschale 56 des Sorters 6 längs einer Objekt-Einführrichtung 58, die senkrecht zur lokalen Objekt-Förderrichtung 60 des Sorters 6 in dem an die Endstellenvorrichtung 10 angrenzenden Bereich des Sorters 6 ist, in die Endstellenvorrichtung 10 eingebracht. Die lokale Objekt-Förderrichtung 60 des Sorters 6 in dem an die Endstellenvorrichtung 10 angrenzenden Bereich des Sorters 6 steht senkrecht zur Zeichenebene von FIG 1. Über die zwischen dem Sorter 6 und der Transportvorrichtung 18 angeordnete Fördereinheit 20 gelangt besagtes Objekt 4a auf die Transportvorrichtung 18.

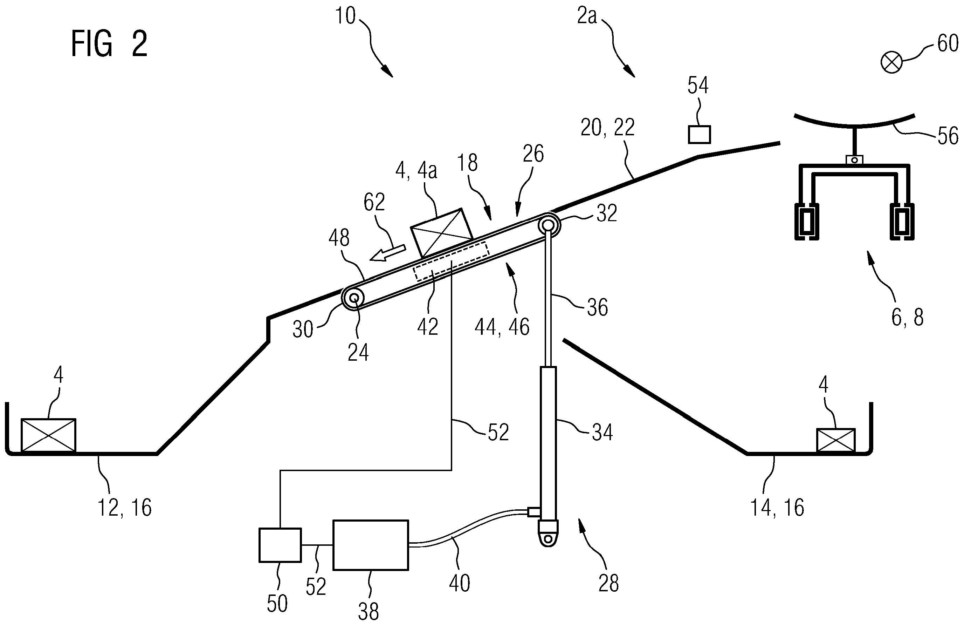

FIG 2 zeigt die Sortieranlage 2a in einem anderen Zustand. In FIG 2 befindet sich das Objekt 4a, das sich zuvor auf dem Sorter 6 befunden hat (vgl. FIG 1), nun auf der schwenkbar gelagerten Förderklappe 26 der Transportvorrichtung 18.

Soll besagtes Objekt 4a in den ersten Objektspeicher 12 eingebracht werden, wird die Förderklappe 26 in ihrer oberen Stellung belassen. In diesem Fall wird der Förderantrieb 42 der Fördervorrichtung 44 vom Steuergerät 50 so gesteuert, dass die Fördervorrichtung 44 das Objekt 4a entlang einer ersten Transportrichtung 62, die im Wesentlichen gleich der Objekt-Einführrichtung 58 (vgl. FIG 1) ist, zum ersten Objektspeicher 12 transportiert.

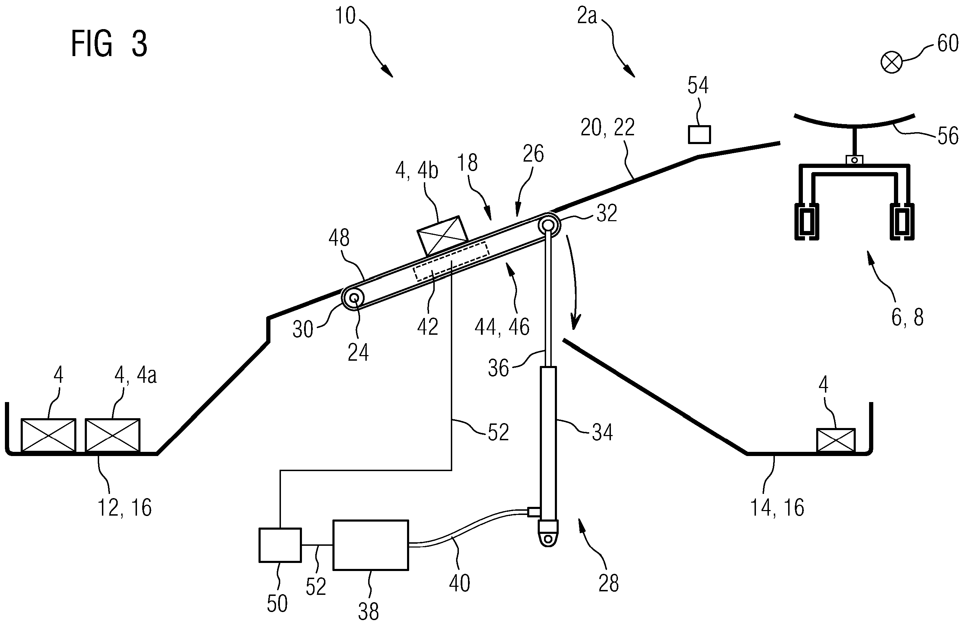

FIG 3 zeigt die Sortieranlage 2a in einem weiteren Zustand. In FIG 3 befindet sich das Objekt 4a, das sich zuvor auf der Förderklappe 26 befunden hat (vgl. FIG 2), nun im ersten Objektspeicher 12, während sich auf der Förderklappe 26 ein weiteres Objekt 4b befindet, das vom Sorter 6 in die Endstellenvorrichtung 10 eingebracht worden ist.

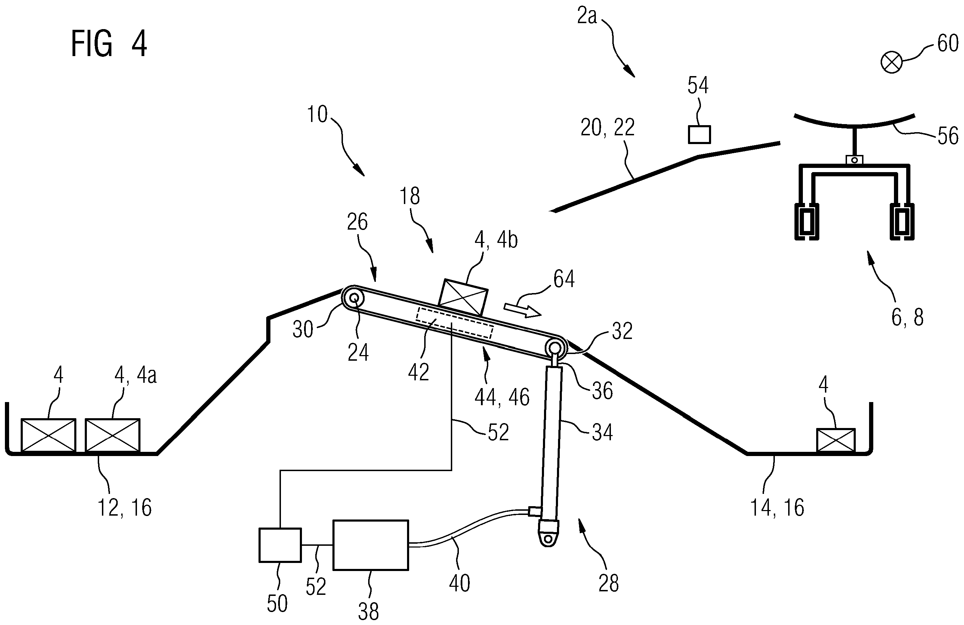

Soll das letztgenannte Objekt 4b in den zweiten Objektspeicher 14 eingebracht werden, wird die Förderklappe 26 um die Schwenkachse 24 in die untere Stellung der Förderklappe 26 (vgl. FIG 4) geschwenkt. Hierbei steuert das Steuergerät 50 die Fluidpumpe 38 derart, dass die Fluidpumpe 38 den Fluiddruck im Hubzylinder 34 so verändert, dass die Kolbenstange 36 des Hubzylinders 34 eingefahren wird.

FIG 4 zeigt die Sortieranlage 2a wiederum in einem anderen Zustand. In FIG 4 befindet sich die Förderklappe 26 in ihrer unteren Stellung, wobei sich das letztgenannte Objekt 4b immer noch auf der Förderklappe 26 befindet.

In diesem Zustand steuert das Steuergerät 50 den Förderantrieb 42 der Fördervorrichtung 44 derart, dass die Fördervorrichtung 44 das letztgenannte Objekt 4b entlang einer zweiten Transportrichtung 64, die von der ersten Transportrichtung 62 (vgl. FIG 2) verschieden ist, zum zweiten Objektspeicher 14 transportiert.

Die Beschreibungen der nachfolgenden Ausführungsbeispiele beschränken sich jeweils primär auf die Unterschiede zum vorhergehenden Ausführungsbeispiel, auf das bezüglich gleicher Merkmale und Funktionen verwiesen wird. Gleiche und/oder einander entsprechende Elemente sind, soweit zweckdienlich, mit den gleichen Bezugszeichen bezeichnet. Merkmale des vorhergehenden Ausführungsbeispiels sind in den nachfolgenden Ausführungsbeispielen übernommen, ohne dass sie erneut beschrieben werden.

FIG 5 zeigt schematisch eine zweite Sortieranlage 2b mit einem Sorter 6 und einer Endstellenvorrichtung 10.

Bei dieser Sortieranlage 2b ist die zwischen der Transportvorrichtung 18 der Endstellenvorrichtung 10 und dem Sorter 6 angeordnete Fördereinheit 20 als antriebslose Rollenbahn 66 ausgebildet. Alternativ kann die Fördereinheit 20 zum Beispiel als Rollenförderer mit einem Förderantrieb oder (wie bei der ersten Sortieranlage 2a) als Rutsche ausgebildet sein.

Ferner umfasst die Förderklappe 26 der Transportvorrichtung 18 bei der zweiten Sortieranlage 2b beispielhaft (anstelle einer Fördervorrichtung mit einem Förderantrieb) einen antriebslosen Schwerkraftförderer 68, welcher im vorliegenden Fall als Rollenbahn 66 ausgebildet ist.

Des Weiteren umfasst der Schwenkmechanismus 28 bei der zweiten Sortieranlage 2b (anstelle eines Hubzylinders und einer Fluidpumpe) ein mit der Förderklappe 26 verbundenes Zugmittel 70 (beispielsweise ein Seil), eine Umlenkrolle 72 zum Führen des Zugmittels 70, eine mit dem Zugmittel 70 verbundene Trommel 74 zum Auf- und Abwickeln des Zugmittels 70 sowie einen mit der Trommel 74 verbundenen Motor 76 zum Antreiben der Trommel 74.

Im vorliegenden Ausführungsbeispiel ist der Motor 76 des Schwenkmechanismus 28 ein Elektromotor. Der Motor 76 ist über eine Steuerleitung 52 mit dem Steuergerät 50 verbunden und wird vom Steuergerät 50 gesteuert.

In FIG 5 ist die zweite Sortieranlage 2b in einem Zustand abgebildet, in welchem sich ein Objekt 4a auf dem Sorter 6 befindet und sich die Förderklappe 26 in ihrer oberen Stellung befindet.

Von diesem Zustand aus wird besagtes Objekt 4a mittels einer Kippschale 56 des Sorters 6 längs einer Objekt-Einführrichtung 58, die senkrecht zur lokalen Objekt-Förderrichtung 60 des Sorters 6 in dem an die Endstellenvorrichtung 10 angrenzenden Bereich des Sorters 6 ist, in die Endstellenvorrichtung 10 eingebracht. Über die zwischen dem Sorter 6 und der Transportvorrichtung 18 angeordnete Fördereinheit 20 gelangt besagtes Objekt 4a auf die Transportvorrichtung 18.

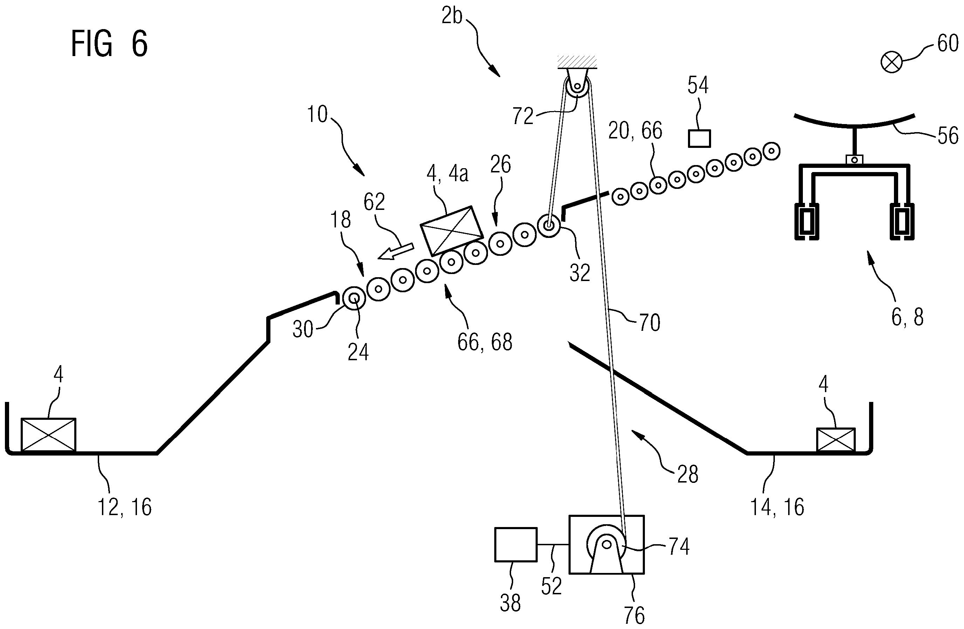

FIG 6 zeigt die zweite Sortieranlage 2b in einem anderen Zustand. In FIG 6 befindet sich das Objekt 4a, das sich zuvor auf dem Sorter 6 befunden hat (vgl. FIG 5), nun auf der schwenkbar gelagerten Förderklappe 26 der Transportvorrichtung 18.

Soll besagtes Objekt 4a in den ersten Objektspeicher 12 eingebracht werden, wird die Förderklappe 26 in ihrer oberen Stellung gelassen, damit das Objekt 4a von der Fördervorrichtung 44 der Förderklappe 26 unter Schwerkrafteinfluss entlang einer ersten Transportrichtung 62, die im Wesentlichen gleich der Objekt-Einführrichtung 58 (vgl. FIG 5) ist, zum ersten Objektspeicher 12 transportiert wird.

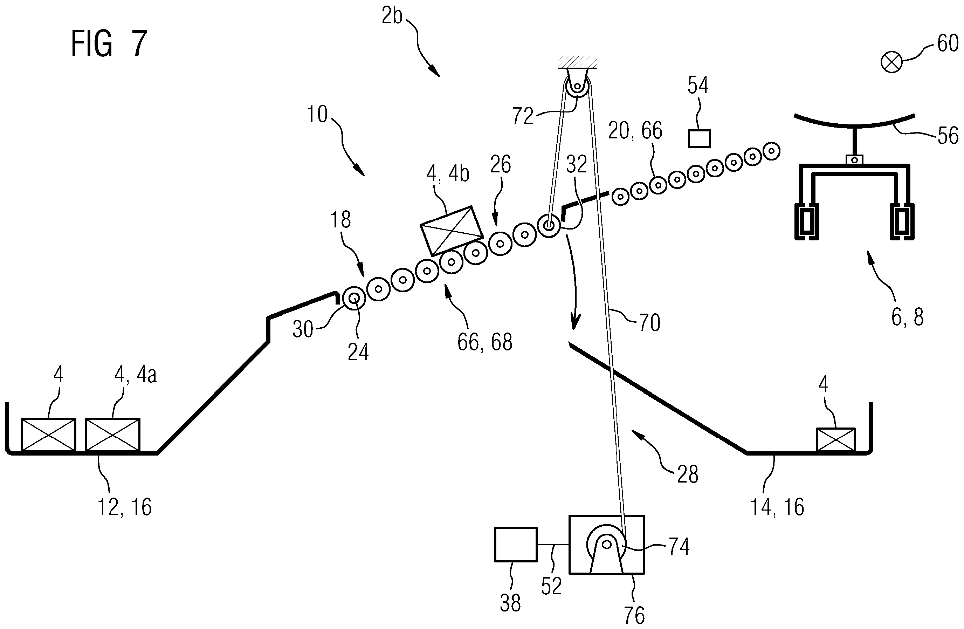

FIG 7 zeigt die zweite Sortieranlage 2b in einem weiteren Zustand. In FIG 7 befindet sich das Objekt 4a, das sich zuvor auf der Förderklappe 26 befunden hat (vgl. FIG 6), nun im ersten Objektspeicher 12, während sich auf der Förderklappe 26 ein weiteres Objekt 4b befindet, das vom Sorter 6 in die Endstellenvorrichtung 10 eingebracht worden ist.

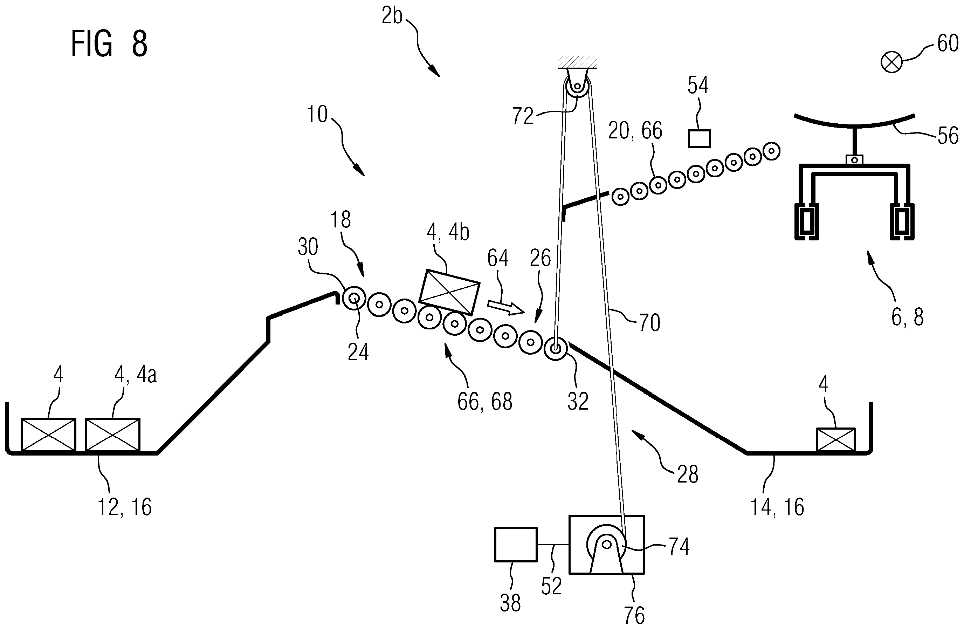

Soll das letztgenannte Objekt 4b in den zweiten Objektspeicher 14 eingebracht werden, wird die Förderklappe 26 um die Schwenkachse 24 in die untere Stellung der Förderklappe 26 (vgl. FIG 8) geschwenkt. Hierbei steuert das Steuergerät 50 den Motor 76 derart, dass der Motor 76 die Trommel 74 so antreibt, dass ein Stück des Zugmittels 70 von der Trommel 74 abgewickelt wird.

FIG 8 zeigt die zweite Sortieranlage 2b wiederum in einem anderen Zustand. In FIG 8 befindet sich die Förderklappe 26 in ihrer unteren Stellung, wobei sich das letztgenannte Objekt 4b immer noch auf der Förderklappe 26 befindet.

In diesem Zustand wird das letztgenannte Objekt 4b von der Fördervorrichtung 44 der Förderklappe 26 unter Schwerkrafteinfluss entlang einer zweiten Transportrichtung 64, die von der ersten Transportrichtung 62 (vgl. FIG 6) verschieden ist, zum zweiten Objektspeicher 14 transportiert.

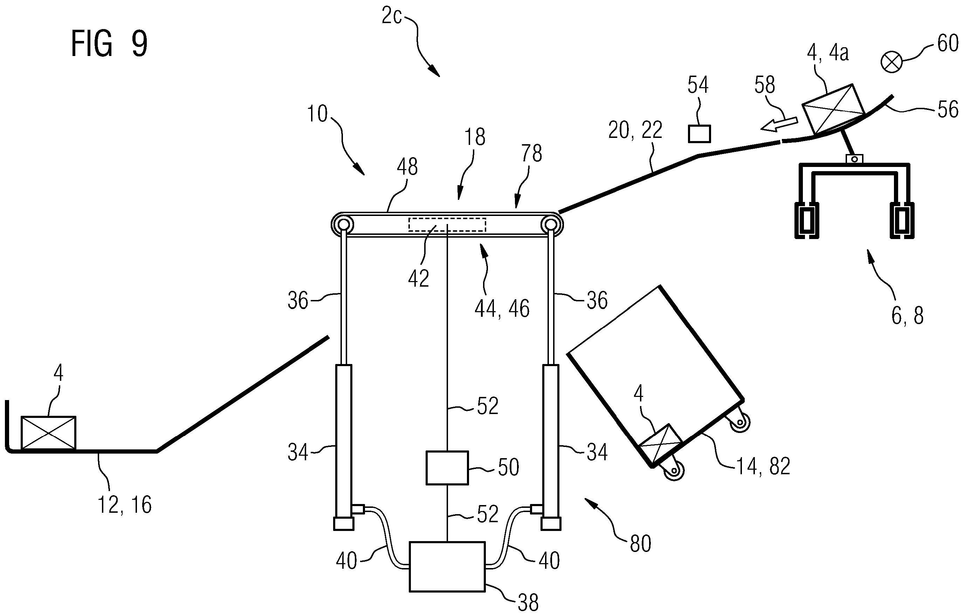

FIG 9 zeigt schematisch eine dritte Sortieranlage 2c mit einem Sorter 6 und einer Endstellenvorrichtung 10.

Bei dieser Sortieranlage 2c weist die Transportvorrichtung 18 der Endstellenvorrichtung 10 (anstelle einer Förderklappe und eines Schwenkmechanismus) einen translatorisch höhenverstellbar gelagerten Fördertisch 78 sowie einen Hubmechanismus 80 zum Anheben und Absenken des Fördertisches 78 auf.

Der Fördertisch 78 umfasst eine mit einem reversierbaren Förderantrieb 42 ausgestattete Fördervorrichtung 44. Im vorliegenden Ausführungsbeispiel ist die Fördervorrichtung 44 als Bandförderer 46 ausgebildet.

Des Weiteren umfasst der Hubmechanismus 80 der Transportvorrichtung 18 mehrere (nicht schwenkbar gelagerte) Hubzylinder 34, auf welchen der Fördertisch 78 abgestützt ist. In FIG 9 sind die Kolbenstangen 36 der Hubzylinder 34 so weit ausgefahren, dass sich der Fördertisch 78 in seiner höchsten Position (also in der gleichen Höhe wie das untere Ende der zwischen der Transportvorrichtung 18 und dem Sorter 6 angeordneten Fördereinheit 20) befindet.

Im vorliegenden Ausführungsbeispiel ist der erste Objektspeicher 12 als Entnahmetisch 16 ausgebildet, wohingegen der zweite Objektspeicher 14 als Rollbehälter 82 ausgebildet ist. Mithilfe einer figürlich nicht dargestellten Haltevorrichtung lässt sich der als Rollbehälter 82 ausgebildete zweite Objektspeicher 14 in eine schräge Stellung bringen und in dieser Stellung fixieren, sodass von der Transportvorrichtung 18 ein Objekt 4 unmittelbar in den zweiten Objektspeicher 14 eingebracht werden kann.

Anstelle des zweiten Objektspeichers 14 kann der erste Objektspeicher 12 als Rollbehälter ausgebildet sein. In diesem Fall kann der zweite Objektspeicher 14 zum Beispiel als Entnahmetisch ausgebildet sein. Weiterhin ist es grundsätzlich möglich, beide Objektspeicher 12, 14 als Rollbehälter auszubilden. Auch bei den vorangegangenen Ausführungsbeispielen kann mindestens einer der beiden Objektspeicher 12, 14 als Rollbehälter ausgebildet sein.

In FIG 9 ist die dritte Sortieranlage 2c in einem Zustand dargestellt, in welchem sich ein Objekt 4a auf dem Sorter 6 befindet.

Von diesem Zustand aus wird besagtes Objekt 4a mittels einer Kippschale 56 des Sorters 6 längs einer Objekt-Einführrichtung 58, die senkrecht zur lokalen Objekt-Förderrichtung 60 des Sorters 6 in dem an die Endstellenvorrichtung 10 angrenzenden Bereich des Sorters 6 ist, in die Endstellenvorrichtung 10 eingebracht. Über die zwischen dem Sorter 6 und der Transportvorrichtung 18 angeordnete Fördereinheit 20 gelangt besagtes Objekt 4a auf die Transportvorrichtung 18.

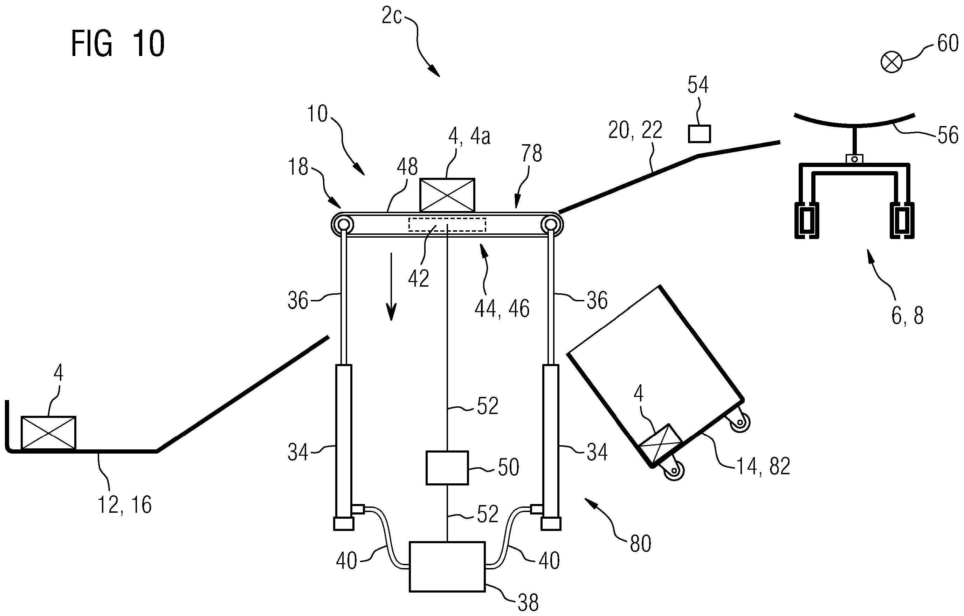

FIG 10 zeigt die dritte Sortieranlage 2c in einem anderen Zustand. In FIG 10 befindet sich das Objekt 4a, das sich zuvor auf dem Sorter 6 befunden hat (vgl. FIG 9), nun auf dem Fördertisch 78 der Transportvorrichtung 18.

Von diesem Zustand aus wird der Fördertisch 78 mithilfe des Hubmechanismus 80 der Transportvorrichtung 18 abgesenkt. Hierbei steuert das Steuergerät 50 die mit den Hubzylindern 34 verbundene Fluidpumpe 38 derart, dass die Fluidpumpe 38 den Fluiddruck in den Hubzylindern 34 so verändert, dass die Kolbenstangen 36 der Hubzylinder 34 eingefahren werden.

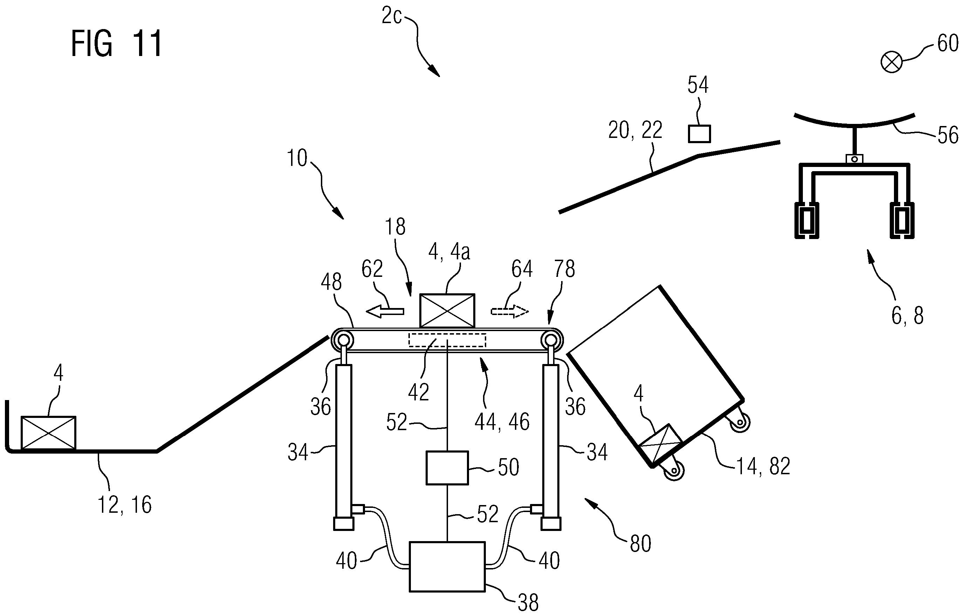

FIG 11 zeigt die dritte Sortieranlage 2c in einem Zustand, in welchem sich der Fördertisch 78 in seiner niedrigsten Position befindet.

Von diesem Zustand aus wird das Objekt 4a, das sich auf dem Fördertisch 78 befindet, in Abhängigkeit von einem Objektparameter, wie zum Beispiel der Größe des Objekts 4a, von der Fördervorrichtung 44 des Fördertisches 78 wahlweise längs einer ersten horizontalen Transportrichtung 62 zum ersten Objektspeicher 12 oder längs einer zweiten horizontalen Transportrichtung 64, die der ersten Transportvorrichtung 18 entgegengerichtet ist, zum zweiten Objektspeicher 14 transportiert. Hierbei wird der Förderantrieb 42 der Fördervorrichtung 44 vom Steuergerät 50 derart gesteuert, dass die Fördervorrichtung 44 besagtes Objekt 4a in die erste Transportrichtung 62 oder in die zweite Transportrichtung 64 fördert.

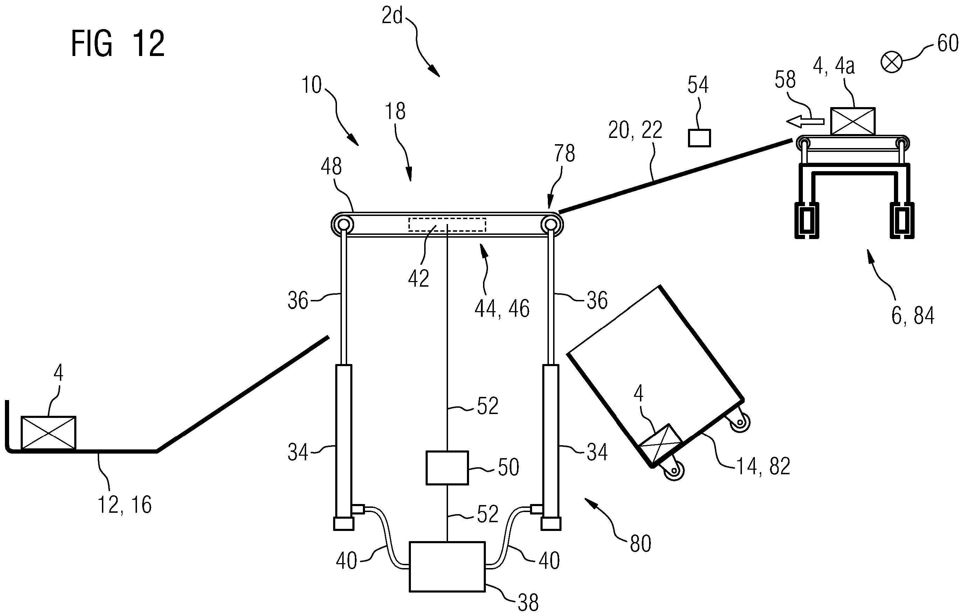

FIG 12 zeigt schematisch eine vierte Sortieranlage 2d mit einem Sorter 6 und einer Endstellenvorrichtung 10.

Diese Sortieranlage 2d entspricht im Wesentlichen der dritten Sortieranlage 2c (siehe FIG 9 bis FIG 11), jedoch ist der Sorter 6 dieser Sortieranlage 2d nicht als Kippschalensorter, sondern als Quergurtsorter 84 ausgebildet. Bei dieser Sortieranlage 2d werden Objekte 4 vom Sorter 6 längs einer horizontalen Objekt-Einführrichtung 58 in die Endstellenvorrichtung 10 eingebracht.

Von der Transportvorrichtung 18, die wie im vorangegangen Ausführungsbeispiel einen translatorisch höhenverstellbar gelagerten Fördertisch 78 sowie einen Hubmechanismus 80 zum Anheben und Absenken des Fördertisches 78 aufweist, wird ein Objekt 4 in der gleichen Weise wie im vorangegangen Ausführungsbeispiel zum jeweiligen Objektspeicher 12, 14 der Endstellenvorrichtung 10 transportiert.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste

- 2a: Sortieranlage
- 2b: Sortieranlage
- 2c: Sortieranlage
- 2d: Sortieranlage
- 4: Objekt
- 4a: Objekt
- 4b: Objekt
- 6: Sorter
- 8: Kippschalensorter
- 10: Endstellenvorrichtung
- 12: Objektspeicher
- 14: Objektspeicher
- 16: Entnahmetisch
- 18: Transportvorrichtung
- 20: Fördereinheit
- 22: Rutsche
- 24: Schwenkachse
- 26: Förderklappe
- 28: Schwenkmechanismus
- 30: Kante
- 32: Kante
- 34: Hubzylinder
- 36: Kolbenstange
- 38: Fluidpumpe
- 40: Fluidleitung
- 42: Förderantrieb
- 44: Fördervorrichtung
- 46: Bandförderer
- 48: Förderband
- 50: Steuergerät
- 52: Steuerleitung
- 54: Sensor
- 56: Kippschale
- 58: Objekt-Einführrichtung
- 60: Objekt-Förderrichtung
- 62: Transportrichtung
- 64: Transportrichtung
- 66: Rollenbahn
- 68: Schwerkraftförderer
- 70: Zugmittel
- 72: Umlenkrolle
- 74: Trommel
- 76: Motor
- 78: Fördertisch
- 80: Hubmechanismus
- 82: Rollbehälter
- 84: Quergurtsorter

## Patentansprüche

1. Sortieranlage (2a-2d) zum Sortieren von Objekten (4, 4a, 4b), umfassend einen Sorter (6) zum Fördern von Objekten (4, 4a, 4b) sowie eine Endstellenvorrichtung (10) zur Aufnahme von Objekten (4, 4a, 4b), wobei der Sorter (6) dazu eingerichtet ist, zumindest einige der auf dem Sorter (6) beförderten Objekte (4, 4a, 4b) längs einer Objekt-Einführrichtung (58), die von einer lokalen Objekt-Förderrichtung (60) des Sorters (6) in einem an die Endstellenvorrichtung (10) angrenzenden Bereich des Sorters (6) verschieden ist, in die Endstellenvorrichtung (10) einzubringen,
wobei die Endstellenvorrichtung (10) einen ersten Objektspeicher (12), einen zweiten Objektspeicher (14) sowie eine Transportvorrichtung (18) aufweist, wobei die Transportvorrichtung (18) dazu eingerichtet ist, die vom Sorter (6) in die Endstellenvorrichtung (10) eingebrachten Objekte (4, 4a, 4b) jeweils wahlweise entlang eines ersten Transportwegs zum ersten Objektspeicher (12) oder entlang eines zweiten Transportwegs zum zweiten Objektspeicher (14) zu transportieren; wobei die Transportvorrichtung (18) dazu eingerichtet ist, die zum ersten Objektspeicher (12) zu transportierenden Objekte (4, 4a, 4b) längs einer ersten Transportrichtung (62) zum ersten Objektspeicher (12) zu transportieren, und die zum zweiten Objektspeicher (14) zu transportierenden Objekte (4, 4a, 4b) längs einer zweiten, von der ersten Transportrichtung (62) verschiedenen Transportrichtung (64) zum zweiten Objektspeicher (14) zu transportieren;
**dadurch gekennzeichnet, dass**
die zweite Transportrichtung (64) eine der ersten Transportrichtung (62) entgegengesetzte Richtung ist.

2. Sortieranlage (2a, 2b, 2d) nach Anspruch 1,
**dadurch gekennzeichnet, dass** die erste Transportrichtung (62) gleich oder im Wesentlichen gleich der Objekt-Einführrichtung (58) ist.

3. Sortieranlage (2a-2d) nach einem der voranstehenden Ansprüche,
**dadurch gekennzeichnet, dass** die lokale Objekt-Förderrichtung (60) des Sorters (6) in dem an die Endstellenvorrichtung (10) angrenzenden Bereich des Sorters (6) senkrecht zur Objekt-Einführrichtung (58) ist.

4. Sortieranlage (2a-2d) nach einem der voranstehenden Ansprüche,
**dadurch gekennzeichnet, dass** der Sorter (6) als Kippschalensorter (8) oder als Quergurtsorter (84) ausgebildet ist.

5. Sortieranlage (2c) nach einem der voranstehenden Ansprüche,
**dadurch gekennzeichnet, dass** die Transportvorrichtung (18) einen antriebslosen Schwerkraftförderer (68), insbesondere eine Rollenbahn (66) oder eine Rutsche, umfasst.

6. Sortieranlage (2a, 2b, 2d) nach einem der voranstehenden Ansprüche,
**dadurch gekennzeichnet, dass** die Transportvorrichtung (18) eine mit einem Förderantrieb (42) ausgestattete Fördervorrichtung (44), insbesondere einen Bandförderer (46) oder einen Rollenförderer, umfasst, wobei der Förderantrieb (42) ein reversierbarer Antrieb ist.

7. Sortieranlage (2c, 2d) nach einem der voranstehenden Ansprüche,
**dadurch gekennzeichnet, dass** die Transportvorrichtung (18) einen translatorisch höhenverstellbar gelagerten Fördertisch (78) sowie einen Hubmechanismus (80) zum Anheben und Absenken des Fördertisches (78) aufweist.

8. Sortieranlage (2a, 2b) nach einem der voranstehenden Ansprüche,
**dadurch gekennzeichnet, dass** die Transportvorrichtung (18) eine um eine Schwenkachse (24) schwenkbar gelagerte Förderklappe (26) sowie einen Schwenkmechanismus (28) zum Schwenken der Förderklappe (26) aufweist.

9. Sortieranlage (2a, 2b) nach Anspruch 8,
**dadurch gekennzeichnet, dass** die Förderklappe (26) zwei senkrecht zur Objekt-Einführrichtung (58) ausgerichtete Kanten (30, 32) aufweist, wobei die Schwenkachse (24) parallel zu diesen beiden Kanten (30, 32) ausgerichtet ist und näher an derjenigen dieser beiden Kanten (30, 32) angeordnet ist, welche den größeren Abstand zum Sorter (6) aufweist.

10. Sortieranlage (2c, 2d) nach einem der voranstehenden Ansprüche,
**dadurch gekennzeichnet, dass** mindestens einer der beiden Objektspeicher (12, 14) als Rollbehälter (82) ausgebildet ist, wobei die Transportvorrichtung (18) dazu eingerichtet ist, ein Objekt (4, 4a, 4b) unmittelbar in den/die als Rollbehälter (82) ausgebildeten Objektspeicher (12, 14) einzubringen.

11. Sortieranlage (2a-2d) nach einem der voranstehenden Ansprüche,
**gekennzeichnet durch** ein Steuergerät (50) zum Steuern der Transportvorrichtung (18), welches dazu eingerichtet ist, in Abhängigkeit von einem oder mehreren Parametern des jeweiligen in die Endstellenvorrichtung (10) eingebrachten Objekts (4, 4a, 4b) zu steuern, zu welchem der beiden Objektspeicher (12, 14) das jeweilige Objekt (4, 4a, 4b) mittels der Transportvorrichtung (18) zu transportieren ist.

12. Verfahren zum Sortieren von Objekten (4, 4a, 4b) in einer Sortieranlage (2a-2d), bei dem Objekte (4, 4a, 4b) auf einem Sorter (6) der Sortieranlage (2a-2d) befördert werden und zumindest einige der auf dem Sorter (6) beförderten Objekte (4, 4a, 4b) vom Sorter (6) längs einer Objekt-Einführrichtung (58) in eine Endstellenvorrichtung (10) der Sortieranlage (2a-2d) eingebracht werden, wobei die Objekt-Einführrichtung (58) von einer lokalen Objekt-Förderrichtung (60) des Sorters (6) in einem an die Endstellenvorrichtung (10) angrenzenden Bereich des Sorters (6) verschieden ist,
wobei die vom Sorter (6) in die Endstellenvorrichtung (10) eingebrachten Objekte (4, 4a, 4b) mithilfe einer Transportvorrichtung (18) der Endstellenvorrichtung (10) jeweils wahlweise entlang eines ersten Transportwegs zu einem ersten Objektspeicher (12) der Endstellenvorrichtung (10) oder entlang eines zweiten Transportwegs zu einem zweiten Objektspeicher (14) der Endstellenvorrichtung (10) transportiert werden; wobei diejenigen Objekte (4, 4a, 4b), die von der Transportvorrichtung (18) zum ersten Objektspeicher (12) transportiert werden, längs einer ersten Transportrichtung (62) zum ersten Objektspeicher (12) transportiert werden, und diejenigen Objekte (4, 4a, 4b), die von der Transportvorrichtung (18) zum zweiten Objektspeicher (14) transportiert werden, längs einer zweiten Transportrichtung (64) zum zweiten Objektspeicher (14) transportiert werden, wobei die erste Transportrichtung (62) von der zweiten Transportrichtung (64) verschieden ist; **dadurch gekennzeichnet, dass**
die zweite Transportrichtung (64) eine der ersten Transportrichtung (62) entgegengesetzte Richtung ist.

13. Verfahren nach Anspruch 12,
**dadurch gekennzeichnet, dass** die Transportvorrichtung (18) von einem Steuergerät (50) gesteuert wird, wobei vom Steuergerät (50) in Abhängigkeit von einem oder mehreren Parametern des jeweiligen in die Endstellenvorrichtung (10) eingebrachten Objekts (4, 4a, 4b) gesteuert wird, zu welchem der beiden Objektspeicher (12, 14) das jeweilige Objekt (4, 4a, 4b) mittels der Transportvorrichtung (18) transportiert wird.

## Claims

1. Sorting installation (2a-2d) for sorting objects (4, 4a, 4b), comprising a sorter (6) for conveying objects (4, 4a, 4b) and also an end station facility (10) for accepting objects (4, 4a, 4b), wherein the sorter (6) is configured to bring at least a few of the objects (4, 4a, 4b) conveyed on the sorter (6) in an object introduction direction (58), which is different from a local direction of object conveyance (60) of the sorter (6) in an area of the sorter (6) adjoining the end station facility (10), into the end station facility (10), wherein the end station facility (10) has a first object store (12), a second object store (14) and also a transport facility (18), wherein the transport facility (18) is configured to transport the objects (4, 4a, 4b) brought into the end station facility (10) by the sorter (6) optionally along a first transport path to the first object store (12) or along a second transport path to the second object store (14) in each case;
wherein the transport facility (18) is configured to transport the objects (4, 4a, 4b) to be transported to the first object store (12), in a first direction of transport (62), to the first object store (12), and the objects (4, 4a, 4b) to be transported to the second object store (14), in a second direction of transport (64) different from the first direction of transport (62), to the second object store (14); **characterised in that**
the second direction of transport (64) is a direction opposite to the first direction of transport (62).

2. Sorting installation (2a, 2b, 2d) according to claim 1, **characterised in that** the first direction of transport (62) is the same or is essentially the same as the object introduction direction (58).

3. Sorting installation (2a-2d) according to one of the preceding claims,
**characterised in that** the local direction of object conveyance (60) of the sorter (6) in the area of the sorter (6) adjoining the end station facility (10) is at right angles to the object introduction direction (58).

4. Sorting installation (2a-2d) according to one of the preceding claims,
**characterised in that** the sorter (6) is embodied as a tilt tray sorter (8) or as a transverse belt sorter (84).

5. Sorting installation (2c) according to one of the preceding claims,
**characterised in that** the transport facility (18) comprises a non-driven gravitational conveyor (68), in particular a roller track (66) or a chute.

6. Sorting installation (2a, 2b, 2d) according to one of the preceding claims,
**characterised in that** the transport facility (18) comprises a conveyor facility (44) equipped with a conveyor drive (42), in particular a belt conveyor (46) or a roller conveyor, wherein the conveyor drive (42) is a reversible drive.

7. Sorting installation (2c, 2d) according to one of the preceding claims,
**characterised in that** the transport facility (18) has a conveyor table (78) supported in a translationally height-adjustable manner as well as a lifting mechanism (80) for raising and lowering the conveyor table (78).

8. Sorting installation (2a, 2b) according to one of the preceding claims,
**characterised in that** the transport facility (18) has a conveyor flap (26) supported pivotably about a pivot axis (24) as well as a pivot mechanism (28) for pivoting the conveyor flap (26).

9. Sorting installation (2a, 2b) according to claim 8,
**characterised in that** the conveyor flap (26) has two edges (30, 32) aligned at right angles to the object introduction direction (58), wherein the pivot axis (24) is aligned in parallel to these two edges (30, 32) and is arranged closer to that edge of these two edges (30, 32) that is at the greater distance from the sorter (6).

10. Sorting installation (2c, 2d) according to one of the preceding claims,
**characterised in that** at least one of the two object stores (12, 14) is embodied as a rolling container (82), wherein the transport facility (18) is configured to bring an object (4, 4a, 4b) directly into the object store(s) (12, 14) embodied as a rolling container (82).

11. Sorting installation (2a-2d) according to one of the preceding claims,
**characterised by** a control device (50) for controlling the transport facility (18), which is configured, as a function of one or more parameters of the respective object (4, 4a, 4b) brought into the end station facility (10), to control to which of the two object stores (12, 14) the respective object (4, 4a, 4b) is to be transported by means of the transport facility (18).

12. Method for the sorting of objects (4, 4a, 4b) in a sorting installation (2a-2d), in which objects (4, 4a, 4b) are conveyed on a sorter (6) of the sorting installation (2a-2d) and at least a few of the objects (4, 4a, 4b) conveyed on the sorter (6) are brought by the sorter (6) in an object introduction direction (58) into an end station facility (10) of the sorting installation (2a-2d), wherein the object introduction direction (58) is different from a local direction of object conveyance (60) of the sorter (6) in an area of the sorter (6) adjoining the end station facility (10),
wherein the objects (4, 4a, 4b) brought by the sorter (6) into the end station facility (10) are transported with the aid of a transport facility (18) of the end station facility (10) optionally along a first transport path to a first object store (12) of the end station facility (10) or along a second transport path to a second object store (14) of the end station facility (10) in each case;
wherein those objects (4, 4a, 4b), which are transported by the transport facility (18) to the first object store (12) are transported in a first direction of transport (62) to the first object store (12), and those objects (4, 4a, 4b), which are transported by the transport facility (18) to the second object store (14) are transported in a second direction of transport (64) to the second object store (14), wherein the first direction of transport (62) is different from the second direction of transport (64);
**characterised in that**
the second direction of transport (64) is a direction opposite to the first direction of transport (62).

13. Method according to claim 12,
**characterised in that** the transport facility (18) is controlled by a control device (50), wherein the control device (50) controls, as a function of one or more parameters of the respective object (4, 4a, 4b) brought into the end station facility (10), to which of the two object stores (12, 14) the respective object (4, 4a, 4b) is transported by means of the transport facility (18).

## Revendications

1. Installation de tri (2a-2d) pour trier des objets (4, 4a, 4b), comprenant une trieuse (6) pour transporter des objets (4, 4a, 4b) ainsi qu'un dispositif de fin de course (10) pour le logement d'objets (4, 4a, 4b), dans laquelle la trieuse (6) est configurée pour introduire dans le dispositif de fin de course (10) au moins certains des objets (4, 4a, 4b) acheminés sur la trieuse (6) le long d'un sens d'introduction d'objet (58) qui est différent d'un sens de transport d'objet local (60) de la trieuse (6) dans une zone adjacente au dispositif de fin de course (10) de la trieuse (6),
dans laquelle le dispositif de fin de course (10) présente un premier stockage d'objets (12), un deuxième stockage d'objets (14) ainsi qu'un dispositif de transport (18), dans laquelle le dispositif de transport (18) est configuré pour transporter les objets (4, 4a, 4b) introduits par la trieuse (6) dans le dispositif de fin de course (10) à chaque fois, au choix, le long d'un premier chemin de transport vers le premier stockage d'objets (12) ou le long d'un deuxième chemin de transport vers le deuxième stockage d'objets (14) ; dans laquelle le dispositif de transport (18) est configuré pour transporter les objets (4, 4a, 4b) à transporter vers le premier stockage d'objets (12) le long d'un premier sens de transport (62) vers le premier stockage d'objets (12), et pour transporter les objets (4, 4a, 4b) à transporter vers le deuxième stockage d'objets (14) le long d'un deuxième sens de transport (64) différent du premier sens de transport (62) ;
**caractérisée en ce que** le deuxième sens de transport (64) est un sens inverse au premier sens de transport (62).

2. Installation de tri (2a, 2b, 2d) selon la revendication 1, **caractérisée en ce que** le premier sens de transport (62) est similaire ou essentiellement similaire au sens d'introduction d'objet (58).

3. Installation de tri (2a-2d) selon l'une des revendications précédentes, **caractérisée en ce que** le sens de transport d'objet local (60) de la trieuse (6), dans la zone adjacente au dispositif de fin de course (10) de la trieuse (6), est perpendiculaire au sens d'introduction d'objet (58).

4. Installation de tri (2a-2d) selon l'une des revendications précédentes, **caractérisée en ce que** la trieuse (6) est conçue comme une trieuse à bacs basculants (8) ou comme une trieuse à bande transversale (84).

5. Installation de tri (2c) selon l'une des revendications précédentes, **caractérisée en ce que** le dispositif de transport (18) comprend un convoyeur par gravité (68) sans entraînement, plus particulièrement un transporteur à rouleaux (66) ou une glissière.

6. Installation de tri (2a, 2b, 2d) selon l'une des revendications précédentes, **caractérisée en ce que** le dispositif de transport (18) comprend un dispositif de convoyage (44) équipé d'un dispositif d'entraînement de convoyage (42), plus particulièrement un convoyeur à courroie (46) ou un convoyeur à rouleaux, dans laquelle le dispositif d'entraînement de convoyage (42) est un entraînement réversible.

7. Installation de tri (2c, 2d) selon l'une des revendications précédentes, **caractérisée en ce que** le dispositif de transport (18) présente une table de transport (78) logée en étant réglable en hauteur en translation ainsi qu'un mécanisme de levage (80) pour lever et abaisser la table de transport (78).

8. Installation de tri (2a, 2b) selon l'une des revendications précédentes, **caractérisée en ce que** le dispositif de transport (18) présente un clapet de convoyage (26) logé de façon pivotante autour d'un axe de pivotement (24) ainsi qu'un mécanisme de pivotement (28) pour pivoter le clapet de convoyage (26).

9. Installation de tri (2a, 2b) selon la revendication 8, **caractérisée en ce que** le clapet de convoyage (26) présente deux arêtes (30, 32) orientées perpendiculairement au sens d'introduction d'objet (58), dans laquelle l'axe de pivotement (24) est orienté parallèlement à ces deux arêtes (30, 32) et est disposé plus près de celle de ces deux arêtes (30, 32) qui présente le plus grand écart par rapport à la trieuse (6).

10. Installation de tri (2c, 2d) selon l'une des revendications précédentes, **caractérisée en ce qu'**au moins l'un des deux stockages d'objets (12, 14) est conçu comme un conteneur roulant (82), dans laquelle le dispositif de transport (18) est configuré pour introduire un objet (4, 4a, 4b) directement dans le / les stockage(s) d'objets (12, 14) conçu(s) comme des conteneur(s) roulant (s) (82) .

11. Installation de tri (2a-2d) selon l'une des revendications précédentes, **caractérisée par** un appareil de commande (50) pour commander le dispositif de transport (18), lequel est configuré pour commander, en fonction d'un ou de plusieurs paramètres de l'objet respectif (4, 4a, 4b) introduit dans le dispositif de fin de course (10), vers lequel des deux stockages d'objets (12, 14) doit être transporté l'objet respectif (4, 4a, 4b) au moyen du dispositif de transport (18).

12. Procédé de tri d'objets (4, 4a, 4b) dans une installation de tri (2a-2d), dans lequel des objets (4, 4a, 4b) sont acheminés sur une trieuse (6) de l'installation de tri (2a-2d) et au moins certains des objets (4, 4a, 4b) acheminés sur la trieuse (6) sont introduits par la trieuse (6) le long d'un sens d'introduction d'objet (58) dans un dispositif de fin de course (10) de l'installation de tri (2a-2d), dans lequel le sens d'introduction d'objet (58) est différent d'un sens de transport d'objet local (60) de la trieuse (6) dans une zone adjacente au dispositif de fin de course (10) de la trieuse (6),
dans lequel les objets (4, 4a, 4b) introduits par la trieuse (6) dans le dispositif de fin de course (10) sont transportés à l'aide d'un dispositif de transport (18) du dispositif de fin de course (10) à chaque fois, au choix, le long d'un premier chemin de transport vers un premier stockage d'objets (12) du dispositif de fin de course (10) ou le long d'un deuxième chemin de transport vers un deuxième stockage d'objets (14) du dispositif de fin de course (10) ;
dans lequel ces objets (4, 4a, 4b) qui sont transportés du dispositif de transport (18) vers le premier stockage d'objets (12), sont transportés le long d'un premier sens de transport (62) vers le premier stockage d'objets (12), et ces objets (4, 4a, 4b), qui sont transportés du dispositif de transport (18) vers le deuxième stockage d'objets (14), sont transportés le long d'un deuxième sens de transport (64) vers le deuxième stockage d'objets (14), le premier sens de transport (62) étant différent du deuxième sens de transport (64) ;
**caractérisé en ce que** le deuxième sens de transport (64) est un sens inverse au premier sens de transport (62).

13. Procédé selon la revendication 12, **caractérisé en ce que** le dispositif de transport (18) est commandé par un appareil de commande (50), dans lequel il est commandé par l'appareil de commande (50) en fonction d'un ou de plusieurs paramètres de l'objet respectif (4, 4a, 4b) introduit dans le dispositif de fin de course (10), vers lequel des deux stockages d'objets (12, 14) est transporté l'objet respectif (4, 4a, 4b) au moyen du dispositif de transport (18).
